Europäisches Patentamt

European Patent Office

Office européen des brevets

(11) Publication number: **0 157 644**
A2

# EUROPEAN PATENT APPLICATION

(21) Application number: 85302349.7

(22) Date of filing: 03.04.85

(51) Int. Cl.⁴: **G 01 J 1/04**

(30) Priority: 03.04.84 US 596483

(43) Date of publication of application: 09.10.85
Bulletin 85/41

(84) Designated Contracting States: **DE FR GB IT SE**

(71) Applicant: THE BABCOCK & WILCOX COMPANY,
1010 Common Street P.O. Box 60035, New Orleans
Louisiana 70160 (US)

(72) Inventor: Ciammaichella, Richard Curtis, 13575 Ravenna
Road, Chardon Ohio 44024 (US)
Inventor: Youmans, Barry J., 287 Nautilus Lane, Rittman
Ohio 44270 (US)

(74) Representative: Cotter, Ivan John et al, D. YOUNG &
CO. 10 Staple Inn, London WC1V 7RD (GB)

(54) **Flame detectors.**

(57) A flame detector (10) comprises a light collecting lens
(16) or other device for collecting electromagnetic radiation
from a flame (12) produced by a flame source (14), a filter (20)
for passing only a portion of the electromagnetic radiation
from the lens (16) which changes from between a flame on
and a flame off condition, a solid state photocell (22) for re-
ceiving the portion of electromagnetic radiation passed by
the filter (20), and a circuit (26) for producing a signal indica-
tive of whether the flame (12) is on or off in response to a
signal generated by the photocell (22). The photocell (22) is
preferably sensitive to ultraviolet radiation to avoid con-
fusion with infrared radiation that is produced by heat near
the flame source and which heat is not necessarily indicative
of whether the flame is on or off. The photocell (22) is prefer-
ably made of gallium arsenide phosphide semiconductive
material.

FLAME DETECTORS

This invention relates to flame detectors.

The safe operation of multiburner boilers is dependent upon instrumentation to verify the presence of flame at each burner. For certain gaseous fuels (i.e. natural gas, methane, hydrogen, CO, etc.) the byproduct of the flame which is usually sensed is the ultraviolet radiation (UV) which is emitted during combustion. Previous instrumentation to sense this UV consisted of photosensitive tubes which enclosed metal electrodes within a partially evacuated glass envelope. When the electrodes are connected across a source of electrical potential (typically 300-1000 volts) and a photon of light strikes the electrodes, the tube conducts current from one electrode to the other.

These tube type UV flame detectors are subject to several shortcomings, as set forth below.

Tube sensitivity and spectral response are difficult to control; therefore, tubes of like design may be unequal in their ability to monitor a flame.

The reliability of the tubes is low since they are fragile and age rapidly when exposed to heat or strong light.

The life of a tube is limited by the rate of air infiltration through the glass wall and at the glass to metal seals of the electrodes, neither of which are perfect.

A high potential of several hundred volts is required to operate most such tubes. This potential is a safety hazard and poses unique material selection problems for transmission and termination components of the system.

The tubes are prone to fail in an unsafe mode. For example, small amounts of electrical leakage in the tube or supply voltage system will cause a "flame on" signal when no flame is present. Mechanical shock can also cause a false "flame on" signal due to electrode movement. Expensive and unreliable electromechanical shutters must be used to block radiation to the cell in order to prove that they have not failed in an unsafe mode.

The tubes are becoming very expensive due to lower production as various UV measuring applications adopt solid state sensors.

Solid state silicon photocells with enhanced UV sensitivity have been tested for use as flame detectors (since 1977), but have failed. Failure is attributed to the fact that although the cells are sensitive to UV in the spectra of interest, their infrared (IR) response is many orders of magnitude greater than their UV response. Since a boiler outputs 10,000 times more IR (noise or interference) than UV, the signal to noise ratio using silicon cells with the best available filters is too low to be acceptable.

According to one aspect of the invention there is provided a flame detector comprising light collection means, a filter means which passes only that portion of the electromagnetic spectrum which differs between flame on and flame off conditions, and a solid state photocell for converting the desired spectra to an electrical signal.

The light collection means may include sighting aids such as reflective vanes, light pipes, prisms, fibre optics and/or optical lenses, depending upon the requirements of a particular application, e.g. a particular burner application. Due to the photocell selection and proper sighting, the filter means can be an inexpensive light absorbing type or could be a more expensive and environmentally sensitive interference filter. The photocell desirably has a sufficiently high band-gap energy to be insensitive to radiation with wavelengths longer than 700 nanometres. The only material which has thus far been demonstrated to perform satisfactorily in this respect is gallium arsenide phosphide (GaAsP).

The foregoing components of the flame detector preferably are so arranged as to maximise the flame radiation which impinges upon the photocell, through the filter means. The photocell may be slightly overfilled to offset vibration and assembly misalignment effects.

In a preferred embodiment described in detail below, the photocell signal is fed to a high gain, high impedance amplifier through a shielded cable. This amplifier converts a short circuit current from the photocell to a high level millivolt signal for further electronic manipulation and amplification. Electronic circuitry outputs an analog signal of relative flame intensity and a logic signal which indicates presence or absence of a flame, for example at an individual burner in a furnace. Both small igniter flames and large main utility flames can be detected and discriminated from boiler fire with the preferred embodiment of the invention. No visible indication of flame is necessary for operation, although longer wavelength radiation does not prevent operation of the preferred detector flame.

The preferred flame detector is simple in design, rugged in construction and economical to manufacture.

According to a second aspect of the invention there is provided a flame detector comprising:

light collection means for collecting electromagnetic radiation from a flame source and having an optical axis;

filter means lying on the optical axis for receiving electromagnetic radiation collected by the light collection means and for passing only that portion of the electromagnetic radiation which changes in dependence upon whether a flame is present at the flame source;

a solid state photocell lying on the optical axis and positioned for receiving said portion of the electromagnetic radiation passed by the filter means, the photocell being sensitive to said portion of electromagnetic radiation to generate a sensed light signal indicative of one of a flame on and a flame off condition for the flame source; and

circuit means connected to the photocell for producing one of a flame on and a flame off signal when the photocell generates said sensed light signal.

The preferred embodiment of the present invention described in detail below differs from previous flame detectors in that a solid state photocell and a filter means in the form of a visible absorption glass filter are used to sense the ultraviolet radiation which is emitted by a flame. The sensor is constructed of gallium arsenide phosphide (GaAsP) semiconductive material (produced by Hammamatsu Corp.) and the filter of doped glass (produced by Corning Glass Co.). Both are inexpensive standard products. An advantage of the GaAsP photocell is that it is insensitive to radiation of wavelength longer than 700 nanometers. This insensitivity reduces long wave interference and allows the use of common glass absorption type filters to tune the response of the sensor to the flame.

The combination of a GaAsP photocell and a glass filter provides a usable signal with the following benefits over previous designs:

high reliability common to solid state devices (mean time between failures (MTBF) of 33 years);

low potential generated poses no safety hazard;

insensitive to vibration;

not damaged by strong light;

consistent performance parameters;

long life;

cannot generate a false flame signal;

lower cost than average UV tube;

compatible with state of the art integrated circuitry; and

high signal to noise ratio.

The preferred embodiment of the present invention provides a solid state flame detector which is capable of detecting whether a flame from a flame source is on or off, and also the level of the flame.

The invention will now be further described, by way of illustrative and non-limiting example, with reference to the accompanying drawings, in which:

Figure 1 is a schematic illustration of a flame detector embodying the invention;

Figure 2 is a graph showing the sensitivity to electromagnetic radiation of different wavelengths of a filter used in the flame detector embodying the invention;

Figure 3 is a schematic diagram of an amplifying circuit used in the flame detector embodying the invention; and

Figure 4 is an overall block diagram of the flame detector embodying the invention.

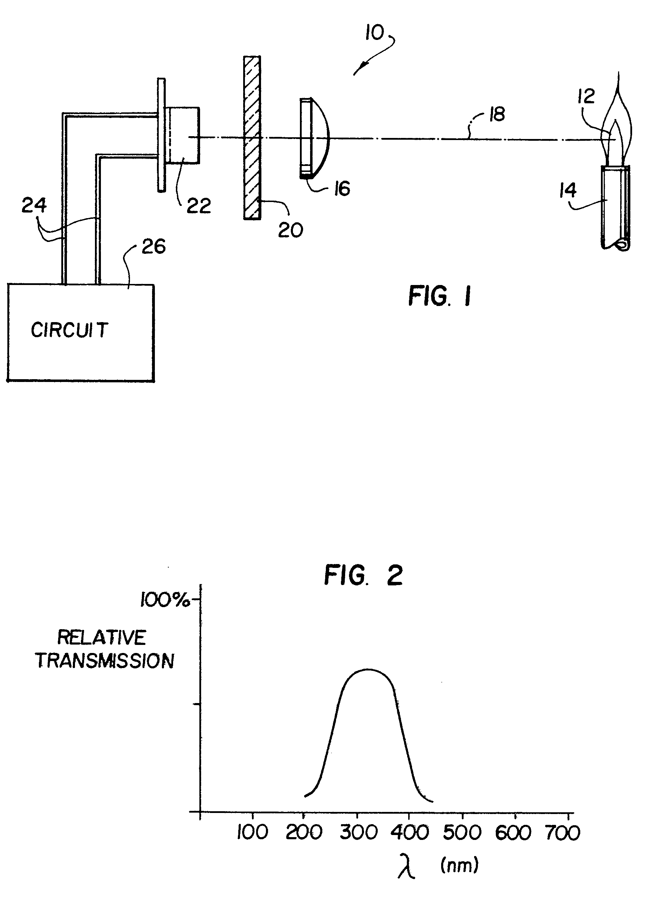

Figure 1 of the drawings shows a flame detector 10 for detecting the presence or absence of a flame 12 from a burner 14 which acts as a flame source.

The detector 10 comprises a quartz glass lens 16 which has an optical axis 18 and forms light collection means for collecting light of various wavelengths from the flame 12. The lens 16 must, at least, be capable of collecting light of a particular wavelength which is indicative of a flame on or a flame off condition.

Filter means in the form of a filter 20 is provided on the optical axis 18 and is preferably formed of doped glass. The filter 20 may be formed of any material which passes only electromagnetic radiation which changes from a flame on to a flame off condition. Such radiation is preferably of the ultraviolet type to avoid confusion with infrared radiation produced by heat and which would not necessarily change from the flame on to the flame off condition.

A solid state photocell or phososensor 22 is provided on the optical axis 18 for receiving a portion of electromagnetic radiation passed by the filter 20. A sensed light signal is generated by the photocell 20 and supplied over wires 24 to circuit means 26 which processes a signal to produce a flame on or other appropriate signal which is indicative of whether the flame source or burner 14 is producing a flame 12, the level of the flame, and also whether only a pilot flame (which may normally also be associated with the burner 14) is present.

As shown in Figure 2, the characteristics of the filter and semiconductive photosensor 22 permit the passage of ultraviolet radiation but not of radiation of higher wavelength.

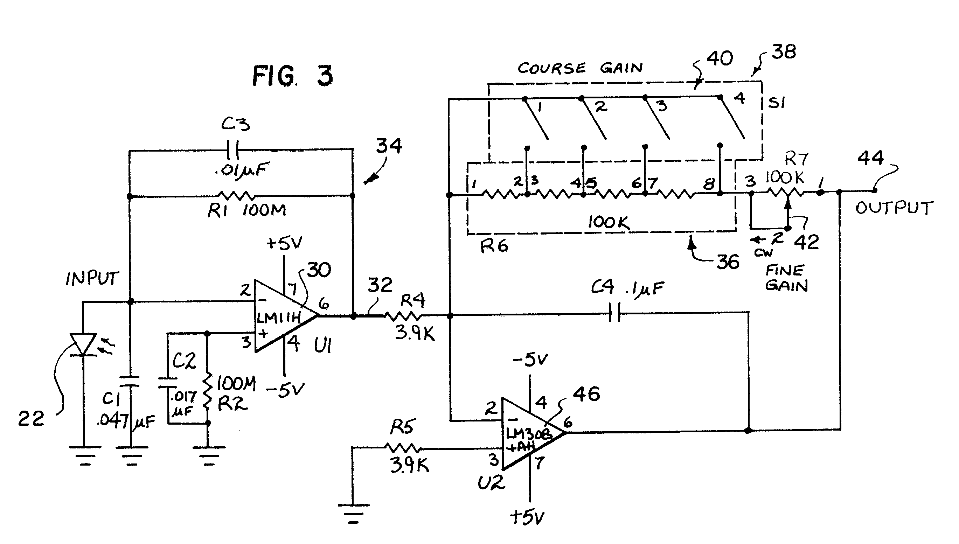

An amplifying circuit to be incorporated in the circuit means 26 is illustrated in Figure 3. The photocell 22 is shown connected to a negative input terminal of an operational amplifier 30 configured to form a preamplifier. The signal from the photocell 22 is compared with a standard signal to generate on a line 32 an output signal which indicates whether a sensed light signal from the photocell 22 has been produced. As shown in Figure 3, the amplifier 30 is provided with a standard feedback loop 34 including a resistor R1.

Signal processing from the line 32 is achieved in a second operational amplifier 46 configured to form a variable gain amplifier.

A plurality of resistors 36 are provided in a coarse gain circuit 38 that includes a plurality of switches 40 for selecting one of the resistors 36. This adjusts the gain, and thus the sensitivity, of the circuit. Fine gain is provided by a potentiometer 42 connected to an analog output terminal 44 which can be connected to a logic arrangement for providing a digital signal for a "flame on" or a "flame off" condition, or an analog signal to determine the size of the flame or the presence only of a pilot flame.

To reduce noise interference by low current level signal inputs, capacitance is added to the input and feedback sections of the amplifier 30 as shown in Figure 3.

The photocell 22 is connected between an input of the preamplifier circuit, more specifically the negative input terminal of the operational amplifier 30, and ground. The operational amplifier 30 is configured in a current to voltage mode (that is to act as a current to voltage converter) by the resistor R1. The operational amplifier 30 has an input current (into or out of its pin 2) much lower than the signal current that is induced in the photocell 22 by the flame being viewed. By the circuit's operation, the current from the photocell 22 is forced to travel through the resistor R1 giving a voltage on the line 32 proportional to the flame-induced signal current in the photocell capacitor C1 and bypasses to ground much of the noise induced on a wire or cable between the photocell 22 and the amplifier 30. The capacitor C3 limits the high frequency response, thus reducing noise in the range above the desired signals. The capacitor C2 balances these so that both inputs of the operational amplifier 30 have the same capacity to ground.

The circuit 38 provides a variable gain to the analog signal and a low impedance signal at the output terminal 44 to drive subsequent stages. The switches 40 change the feedback resistor of the operational amplifier 46 in fixed steps and the variable resistor 42 provides a fine adjustment bewteen the steps. A capacitor C4 provides a high frequency rolloff in the response of the stage, eliminating noise from the output terminal 44 while maintaining the desired flame signal.

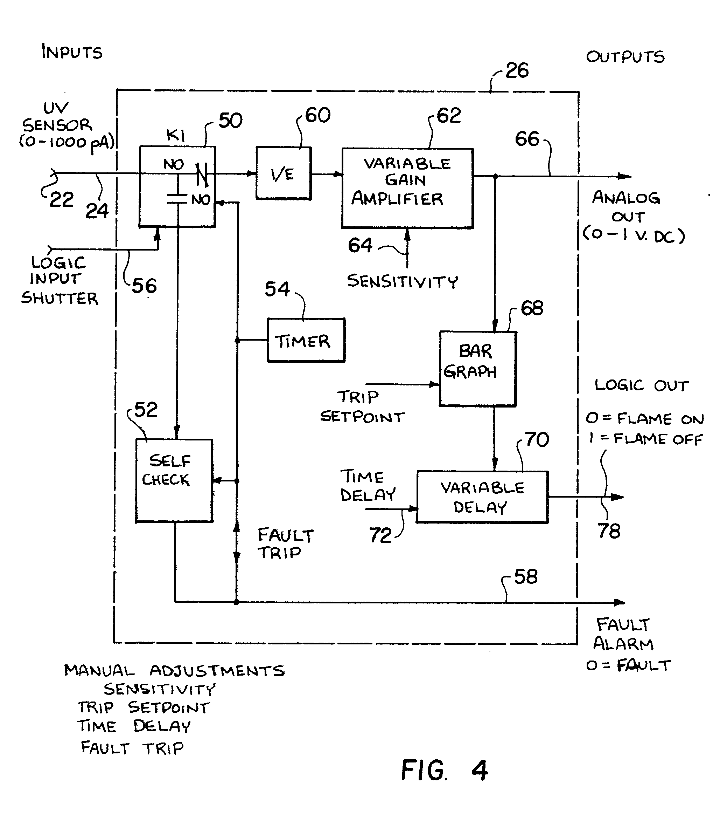

As shown in Figure 4, the circuit means 26 may include a logic block (relay) 50 which can be connected to a self-check unit 52 in a loop with a timer 54 for determining the integrity of the sensor 22. This circuit is used in conjunction with a logic input shutter signal 56. If a fault, that is an inappropriate response of the sensor 22, is detected, a fault signal is produced on a fault line 58.

With the sensor 22 operating correctly, its sensed light signal is provided over an I/E or current/voltage unit 60 to a variable gain amplifier gain 62 having sensitivity which is adjustable at an input 64. The output of the amplifier 62 can be provided on lines 66 to a bar graph 68 for making a graphic record of the flame, as well as to an output for determining the magnitude of the flame. The line 66 is also connected to a variable time delay 70 which includes a variable time delay adjustable at a terminal 72 and a logic output 78 which produces a 1 or a 0 output as a digital indication of whether the flame is on or off.

In Figure 4, the sensor 22 is shown connected to the input of the I/E or current to voltage converter 60 (the preamplifier - comprising the operational amplifier 30 - of Figure 3) by means of the relay 50 or, alternatively, to a self check circuit 52, as determined by the timer 54 or the logic input shutter signal 56. Periodically, by means of the timer 54 or under system or operator initiation by the logic input shutter control signal 56, the relay 50 is switched to connect the sensor 22 to the self-check circuit 52 to perform a self-check test.

In the self-check test, a voltage is placed across the photocell 22 in its reverse-biased direction. Since the photocell 22 normally appears as an open circuit for small reverse bias voltages, any current flow is due to wiring leakage cable faults or a degraded photocell. A threshold level is set on this current and, if it is exceeded, a fault trip signal is sent from the module on the fault line 58.

8          0157644

CLAIMS

1.    A flame detector (10) comprising:

light collection means (16) for collecting electromagnetic radiation from a flame source (14) and having an optical axis (18);

filter means (20) lying on the optical axis (18) for receiving electromagnetic radiation collected by the light collection means (16) and for passing only that portion of the electromagnetic radiation which changes in dependence upon whether a flame (12) is present at the flame source (14);

a solid state photocell (22) lying on the optical axis (18) and positioned for receiving said portion of the electromagnetic radiation passed by the filter means (20), the photocell (22) being sensitive to said portion of electromagnetic radiation to generate a sensed light signal indicative of one of a flame on and a flame off condition for the flame source (14); and

circuit means (26) connected to the photocell (22) for producing one of a flame on and a flame off signal when the photocell (22) generates said sensed light signal.

2.    A flame detector according to claim 1, wherein the filter means (20) comprises doped glass which is capable of passing electromagnetic radiation in the ultraviolet wavelength range and of blocking electromagnetic radiation in the infrared range.

3.    A flame detector according to claim 1 or claim 2, wherein the solid state photocell (22) is made of GaAsP semiconductive material.

4.    A photodetector according to claim 1, claim 2 or claim 3, wherein the light collection means (16) comprises a quartz lens.

5.    A flame detector according to any one of the preceding claims, wherein the circuit means (26) comprises an amplifier (30; 60) for amplifying said sensed light signal to produce an amplified signal, and logic means connected to the amplifier for receiving said amplified signal to produce one of a flame on and a flame off digital signal indicative of whether a flame is present at the flame source (14).

FIG. 1

FIG. 2

RELATIVE TRANSMISSION

100%

$\lambda$ (nm)

FIG. 3

FIG. 4